# EUROPEAN PATENT SPECIFICATION

(11) **EP 1 643 608 B1**
(45) Date of publication and mention of the grant of the patent: **23.05.2012**
(21) Application number: 05255958.0
(22) Date of filing: 26.09.2005
(51) Int. Cl.: H02J 4/00, H04L 12/40, H02J 13/00

(54) **Individually and redundantly addressable solid-state power controllers on multiple modules in a power distribution assembly**
Individuell und redundant adressierbare Festkörperleistungssteuerungsvorrichtungen für eine Mehrheit von Modulen in einer Stromverteilerbaugruppe
Dispositifs de commande de puissance à semi-conducteur addressables individuellement et redondants sur plusieurs modules dans un ensemble de distribution de puissance

(30) Priority: 30.09.2004 US 955840
(43) Date of publication of application: 05.04.2006
(73) Proprietor: Hamilton Sundstrand Corporation, Windsor Locks, CT 06096-1010 (US)
(72) Inventor: Hanson, Michael, Rockford Illinois 61114 (US); Maier, Josef, Munningen (DE); Plude, Curtis, Rockton Illinois 61072 (US); Krakowski, Darren, Rockford Illinois 49341 (US)
(74) Representative: Leckey, David Herbert

(56) References cited:
- US-A- 3 842 249
- US-A1- 2003 110 403
- US-A1- 2004 130 837

## Description

### Field of the Invention

The invention relates to architectures for power distribution assemblies, and more particularly to communication and control architectures for secondary power distribution assemblies.

### Background of the Invention

Vehicles, such as an aircraft, typically utilise mechanical circuit breaker panels, relay panels and distributed control units to distribute secondary power on control utility systems. A secondary power distribution assembly (SPDA) typically integrates these various functions and distributes power from a primary source to various aircraft systems and to control utility systems. An SPDA includes a chassis that is mounted within the vehicle and that houses multiple power modules used to power the aircraft systems. Control modules are also housed within the SPDA, for functions such as communications, signal processing and so forth. The power modules interact with the control modules to provide proper communication and control of power for each of the aircraft systems.

A control system defines the communication protocols between the power modules, control modules, and the various aircraft systems. Each power module includes at least one solid-state power controller (SSPC). Multiple power modules and power modules with multiple SSPCs make the SPDA capable of controlling multiple loads. Traditionally, a common serial bus is used to communicate messages to SSPCs for multiple modules. These messages communicate on/off state changes, status information, and output data as well as other information.

A common serial bus to command the on/off state to SSPCs on multiple modules within a power management system is a cost effective and efficient approach. The serial bus is often redundant to account for bus failures or control processor failures when the system has redundant control processors. However, the problem that occurs with the typical implementation is that there is a common point failure on output modules that contain multiple SSPCs. This common point of failure will prevent the data bus, single or redundant, from communicating with any of the SSPCs on the module.

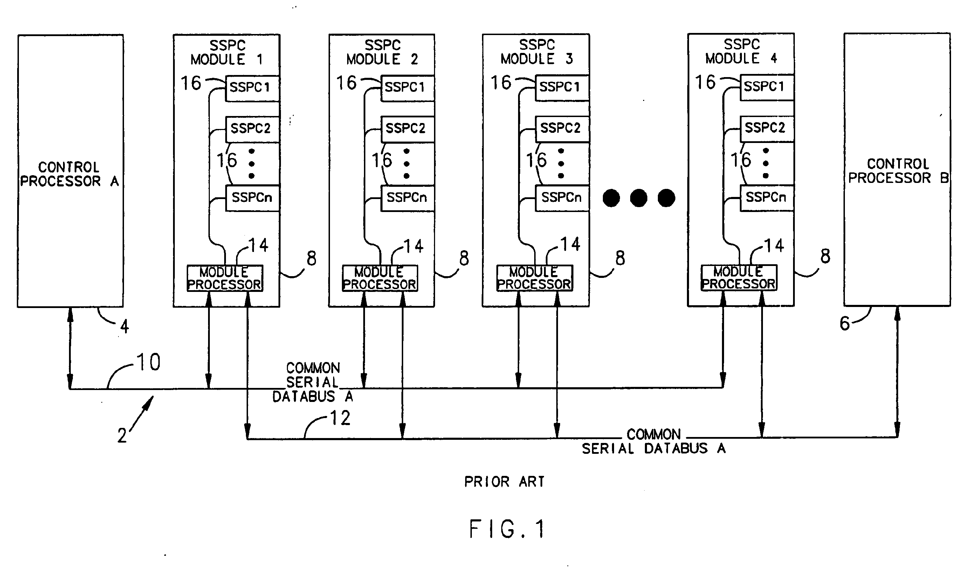

The problem with current systems in use is illustrated in Figure 1. Figure 1 shows a typical SPDA 2 of current design. The SPDA 2 has two control processors, a first control processor module 4 and a second control processor module 6. Control processor module 4 couples to multiple power modules 8 by way of a first common serial data bus 10. Control processor module 6 couples to the power modules 8 by way of a second common serial data bus 12.

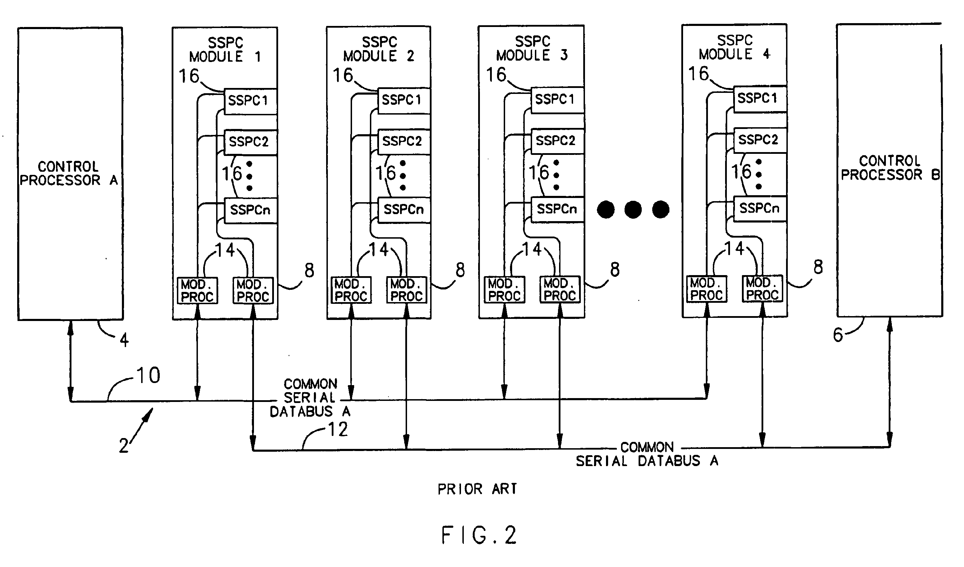

Each power module 8 has a module processor 14. The module processor 14 within each power module 8 is a single point where all data targeted for individual SSPCs 16 on the power module 8 is processed, even though the backplane data bus is redundant through the implementation of the dual control processor modules 4, 6 and serial data buses 10, 12. A failure of a module processor 14 results in loss of control of all the SSPCs 16 on a respective power module 8. This problem can be avoided by duplicating the module processors 14 on each power module 8 and providing redundant communications to each of the individual SSPCs 16 as shown in Figure 2. However, this comes at the cost of duplicating the module level processor 14 on each power module 8. US 2004130837 discloses a communication and control architecture, wherein electrical loads are controlled each by a power controller. First and second control modules communicate with each power controller over Ethernet switches, data buses and power modules.

### Summary of the Invention

The invention comprises an improved communication and control architecture for a secondary power distribution assembly that comprises common dual serial data buses that connect corresponding control processor modules directly to associated solid state power controllers in a plurality of power modules according to claim 1.

### Description of the Drawings

Figure 1 shows a block diagram of a typical SPDA of one architecture according to the prior art.
Figure 2 shows a block diagram of a typical SPDA of another architecture according to the prior art.
Figure 3 shows a block diagram of a SPDA architecture according to one preferred embodiment of the invention.
Figure 4 shows a block diagram of a SPDA architecture according to another preferred embodiment of the invention.
Figure 5 shows a detailed view of connections for SSPCs in a power module for a SPDA according to the embodiment of the invention shown in Figure 4.

### Detailed Description of the Invention

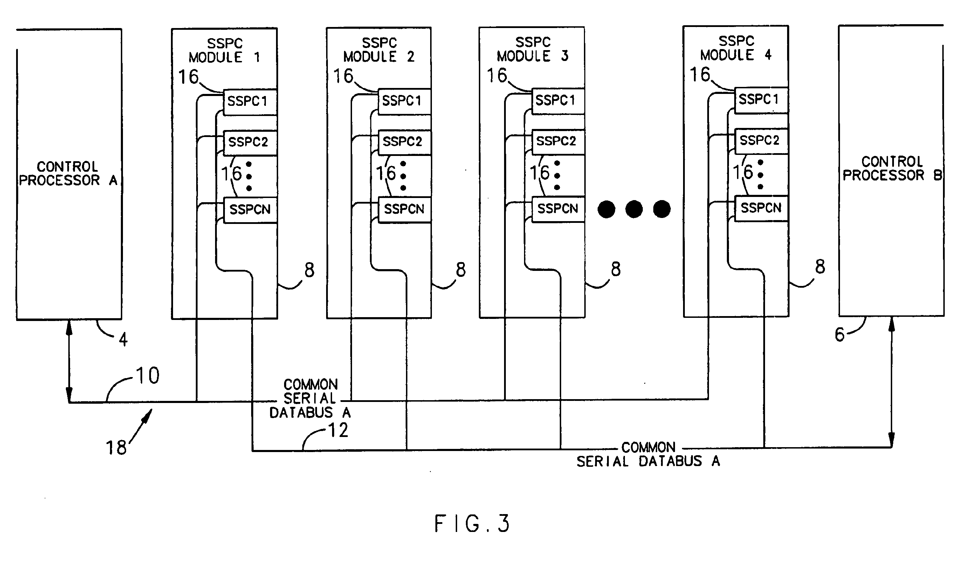

Figure 3 shows an SPDA 18 according to a preferred embodiment of the invention. The SPDA 18 utilises the same control processor modules 4, 6 and common serial data buses 10, 12 as the SPDA 2 shown in Figures 1 and 2. However, the common serial data busses 10, 12 connect directly to the individual SSPCs 16 in each power module 8. No module processors 14 are used, eliminating all single point communications failures from impacting more than one SSPC 16 on all the power modules 8. The failure modes and effects of this configuration according to the invention are as follows.

| | |
|---|---|
| Failure | Effect |
| Control Processor 4 fails | Control Processor 6 takes over |
| Common Serial Bus 10 fails | Control Processor 6 takes over using Bus 12 |
| Control Processor 6 fails | Control Processor 4 takes over |
| Common Serial Bus 12 fails | Control Processor 4 takes over using Bus 10 |
| A SSPC16 fails on both buses | Only that SSPC16 is affected |

The SPDA 18 according to the invention is thus more robust than the SPDA 2 of current design. However, the individual SSPCs 16 must have communications processors that support a relatively high bandwidth bus to provide fast updates of commands to all the SSPCs 16. Typically, there are a maximum of 20 SSPCs in each power module 8 and the SPDA may have 16 or more power modules 8.

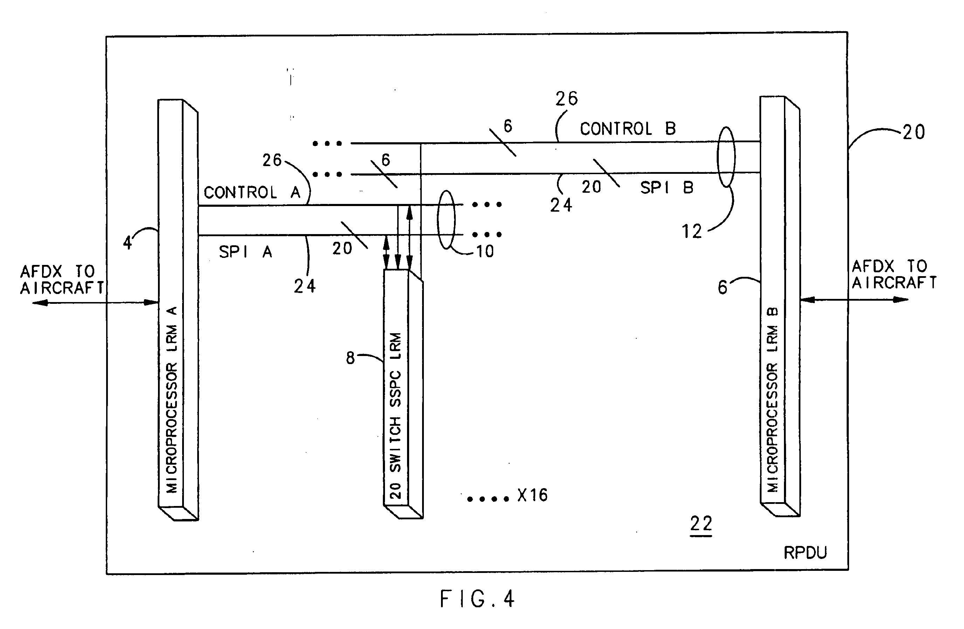

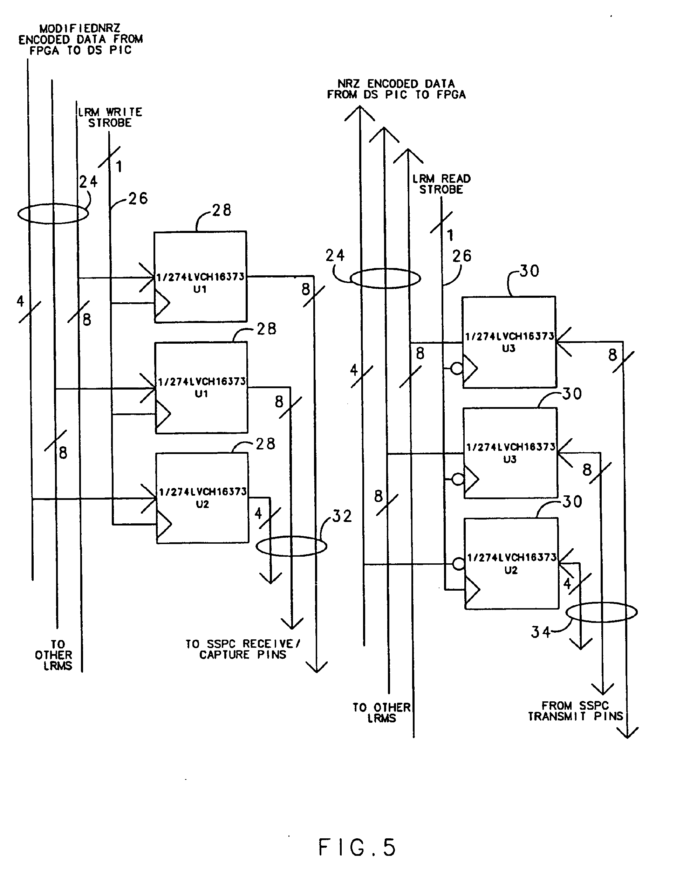

Figures 4 and 5 illustrate another preferred embodiment of an SPDA 20 according to the invention. The SPDA 20.has a configuration that albws the SSPCs 16 to use a slower interface whilst maintaining or improving the overall performance of the SPDA 20. By way of example only, Figure 4 shows an SPDA 20 with up to 20 SSPCs 16 per power module 8 and 16 modules in a SPDA 20 chassis.

Just as for the embodiment of the invention described above in connection with Figure 3, the SPDA 20 provides direct communications with each SSPC 16 in each power module 8 in such a way that no single point failure will cause the loss of more than one switch. The SPDA has a backplane 22 with a hardware controlled data mover that uses common serial data buses 10, 12 that each comprisemultiple serial data lines to exchange information directly to and from each SSPC 16. Each of the processor modules 4, 6 multiplexes communications and control data to each of the SSPCs 16 on each of the power modules 8. For instance, if each power module 8 comprises a maximum of 20 SSPCs, each common serial data bus 10, 12 comprises 20 serial data lines 24 and one control line 26 for selecting a power module 8. The control line 26 may comprise a single control data line for selecting the power modules 8, such as a single control data line with multiple-bit encoding, such as three bit encoding as shown in Figures 4 and 5, or alternatively multiple control data lines, such as six select lines.

The multiple serial data lines 24 used for multiplexing may be of any type that allows the recognition of a transition from one bit of data to another, such as a serial peripheral interface (SPI) bus, a modified non-return-to-zero (MNRZ) bus, or a Manchester-encoded bus. As shown in Figure 4, each power module 8 interfaces with 40 serial data bus line ports, 20 from each control processor module 4, 6, that is, two ports per SSPC 16. If any of the power modules 8 have less than 20 SSPCs 16, the spare ports for such power modules 8 have appropriate terminations. The common serial data buses 10,12 are multiplexed in such a way that all 20 SSPCs on each power module 8 exchange data with the associated processor control module 4, 6 at the same time.

As shown in Figure 5, each SSPC 16 on each power module 8 connects to both control processor modules 4, 6 through a dedicated serial data bus line 24 for each of the control processor modules 4, 6. The SSPC 16 circuitry exchanges data through its associated serial data bus lines 24 with either control processor supply module 4, 6 when requested by way of tri-stateable latches 28 and tri-stateable buffers 30. Each control processor module 4, 6 can independently request an exchange through the control lines 26 with a write strobe command by way of the latches 28 and SSPC receive data lines 32 that connect to receive/capture pins on each SSPC 16 and with a read strobe command by way of the buffers 30 and SSPC transmit data lines 34 that connect to transmit pins on each SSPC 16. In this way, multiplexing occurs every bit period. The control lines 26 thereby direct information to and from power modules 8 and the serial data lines 24 move data to and from the SSPCs 16. Each SSPC 16 acts on the most recently received control information and does not make any determination as to which control processor module 4, 6 should be in control.

Described above is an improved communication and control architecture for a secondary power distribution assembly that comprises common dual serial data buses that connect corresponding control processor modules directly to associated solid state power controllers in a plurality of power modules. It should be understood that the embodiments of the invention as described are only illustrative implementations of the invention, that the various parts and arrangement thereof may be changed or substituted, and that the invention is only limited by the scope of the attached claims.

## Claims

1. A communication and control architecture for a secondary power distribution assembly (SPDA) (2), comprising:
a plurality of power modules (8), each power module comprising at least one solid-state power controller (SSPC) (16) for controlling at least one electrical load connected to the secondary power distribution assembly (SPDA) (2);
first and second control modules (4,6) for signal processing and transfer of communications and control data within the secondary power distribution assembly (SPDA) (2); and
first and second serial data buses (10,12), with each bus connecting one of the control modules (4,6) directly to each solid state power controller (SSPC) (16) within each power module (8) to transfer communications and control data between the control modules (4,6) and each solid state power controller (SSPC) (16).

2. The communication and control architecture of Claim 1, wherein the first and second control modules (4,6) provide redundant communications and control data to each solid state power controller (SSPC) (16) within each power module (8).

3. The communications and control architecture of Claim 1 or 2, wherein the second control module (16) transfers all communications and control data for each solid state power controller (SSPC) (16) when the first control module (4) fails.

4. The communication and control architecture of Claim 1, 2 or 3, wherein the second control module (6) transfers communications and control data for each solid state power controller (SSPC) (16) through the second serial data bus (12) when the first serial data (10) bus fails.

5. The communication and control architecture of any of Claims 1 to 4, wherein the first control module (4) transfers all communications and control data for each solid state power controller (SSPC) (16) when the second control module (6) falls.

6. The communication and control architecture of any of Claims 1 to 5, wherein the first control module (4) transfers communications and control data for each solid state power controller (SSPC) (16) through the first serial data bus (10) when the second serial data bus (12) fails.

7. The communication and control architecture of any preceding Claim, wherein each serial data bus (10,12) comprises a single line.

8. The communication and control architecture of any of Claims 1 to 6, wherein each serial data bus (10,12) comprises a plurality of multiplexed data lines (24) and a control line (26), with at least as many multiplexed data lines (24) as the maximum number of solid state power controller (SSPCs) (16) in each power module (8) and with data on the multiplexed data lines (24) directed to the solid state power controller (SSPCs) (16) within the power module (8) selected by the control lines (26).

9. The communication and control architecture of Claim 8, wherein the multiplexed data lines (24) are of a type that allows the recognition of a transition from one bit of data to another.

10. The communication and control architecture of Claim 9, wherein the multiplexed data lines (24) comprise serial peripheral interface (SPI) lines.

11. The communication and control architecture of Claim 9, wherein the multiplexed data lines (24) comprise modified non-return-to-zero (MNRZ) lines.

12. The communication and control architecture of Claim 9, wherein the multiplexed data lines (24) comprise Manchester encoded lines.

13. The communication and control architecture of any of Claims 8 to 12, wherein the control lines (26) transfer multiple-bit encoded select signals for selection of a power module (8).

14. The communications and control architecture of Claim 13, wherein the control lines (26) carry three bit encoded select signals.

15. The communications and control architecture of any of Claims 8 to 12, wherein the control lines (24) each comprise a plurality of control data lines that each transfer single-bit select signals for selection of a power module.

16. The communications and control architecture of Claim 15, wherein the control lines (26) each comprise six select lines.

17. The communications and control architecture of any of Claims 8 to 16, further comprising:
tri-stateable latches (28) in each power module (8) controlled by a write strobe signal on the control lines (26) for coupling the multiplexed data lines (24) to receive/capture pins on each solid state power controller (SSPC) (16); and
tri-stateable buffers (30) in each power module (8) controlled by a read strobe signal on the control lines (26) for coupling the multiplexed data lines (24) to transmit pins on each solid state power controller (SSPC) (16).

## Patentansprüche

1. Kommunikations- und Steuerarchitektur für eine sekundäre Energieverteilungsvorrichtung (SPDA) (2) aufweisend:
mehrere Leistungsmodule (8), wobei jedes Leistungsmodul wenigstens eine Festkörperleistungssteuerung (SSPC) (16) zum Steuern wenigstens einer mit der sekundären Energieverteilungsvorrichtung (SPDA) (2) verbundenen Last aufweist;
erste und zweite Steuermodule (4, 6) zur Signalverarbeitung und Übertragung von Kommunikations- und Steuerdaten innerhalb der sekundären Energieverteilungsvorrichtung (SPDA) (2); und
einen ersten und einen zweiten seriellen Datenbus (10, 12), wobei jeder Bus eines der Steuermodule (4, 6) direkt mit jeder Festkörperleistungssteuerung (SSPC) (16) in jedem Leistungsmodul (8) verbindet, um Kommunikations- und Steuerdaten zwischen den Steuermodulen (4, 6) und jeder Festkörperleistungssteuerung (SSPC) (16) zu übertragen.

2. Kommunikations- und Steuerarchitektur nach Anspruch 1, wobei das erste und das zweite Steuermodul (4, 6) redundante Kommunikations- und Steuerdaten an jede Festkörperleistungssteuerung (SSPC) (16) in jedem Leistungsmodul (8) liefern.

3. Kommunikations- und Steuerarchitektur nach Anspruch 1 oder 2, wobei das zweite Steuermodul (16) alle Kommunikations- und Steuerdaten für jede Festkörperleistungssteuerung (SSPC) (16) überträgt, wenn das erste Steuermodul (4) ausfällt.

4. Kommunikations- und Steuerarchitektur nach einem der Ansprüche 1, 2 oder 3, wobei das zweite Steuermodul (6) Kommunikations- und Steuerdaten für jede Festkörperleistungssteuerung (SSPC) (16) durch den zweiten seriellen Datenbus (12) überträgt, wenn der erste serielle Datenbus (10) ausfällt.

5. Kommunikations- und Steuerarchitektur nach einem der Ansprüche 1 bis 4, wobei das erste Steuermodul (4) alle Kommunikations- und Steuerdaten für jede Festkörperleistungssteuerung (SSPC) (16) überträgt, wenn das zweite Steuermodul (6) ausfällt.

6. Kommunikations- und Steuerarchitektur nach einem der Ansprüche 1 bis 5, wobei das erste Steuermodul (4) Kommunikations- und Steuerdaten für jede Festkörperleistungssteuerung (SSPC) (16) durch den ersten seriellen Datenbus (10) überträgt, wenn der zweite serielle Datenbus (12) ausfällt.

7. Kommunikations- und Steuerarchitektur nach einem der vorangehenden Ansprüche, wobei jeder serielle Datenbus (10, 12) eine Einzelleitung aufweist.

8. Kommunikations- und Steuerarchitektur nach einem der Ansprüche 1 bis 6, wobei jeder serielle Datenbus (10, 12) mehrere gemultiplexte Datenleitungen (24) und eine Steuerleitung (26) aufweist, mit wenigstens so vielen gemultiplexten Datenleitungen (24), wie maximal Festkörperleistungssteuerungen (SSPC) (16) in jedem Leistungsmodul (8) vorhanden sind, und wobei die Daten auf den gemultiplexten Datenleitungen (24), die an die Festkörperleistungssteuerungen (SSPC) (16) in dem Leistungsmodul (8) gerichtet sind, durch die Steuerleitungen (26) ausgewählt werden.

9. Kommunikations- und Steuerarchitektur nach Anspruch 8, wobei die gemultiplexten Datenleitungen (24) von einem Typ sind, der es ermöglicht, einen Übergang von einem Datenbit auf ein anderes zu erkennen.

10. Kommunikations- und Steuerarchitektur nach Anspruch 9, wobei die gemultiplexten Datenleitungen (24) serielle Peripherieanschlussleitungen (SPI) enthalten.

11. Kommunikations- und Steuerarchitektur nach Anspruch 9, wobei die gemultiplexten Datenleitungen (24) modifizierte Nicht-auf-Null-Zurückkehr-Leitungen (MNRZ) enthalten.

12. Kommunikations- und Steuerarchitektur nach Anspruch 9, wobei die gemultiplexten Datenleitungen (24) Manchester-kodierte Leitungen aufweisen.

13. Kommunikations- und Steuerarchitektur nach einem der Ansprüche 8 bis 12, wobei die Steuerleitungen (26) mit mehreren Bits kodierte Auswahlsignale zur Auswahl eines Leistungsmoduls (8) übertragen.

14. Kommunikations- und Steuerarchitektur nach Anspruch 13, wobei die Steuerleitungen (26) mit drei Bits kodierte Auswahlsignale tragen.

15. Kommunikations- und Steuerarchitektur nach einem der Ansprüche 8 bis 12, wobei die Steuerleitungen (24) jeweils mehrere Steuerdatenleitungen aufweisen, die jeweils Ein-Bit-Auswahlsignale zur Auswahl eines Leistungsmoduls übertragen.

16. Kommunikations- und Steuerarchitektur nach Anspruch 15, wobei die Steuerleitungen (26) jeweils sechs Auswahlleitungen aufweisen.

17. Kommunikations- und Steuerarchitektur nach einem der Ansprüche 8 bis 16 zusätzlich aufweisend:
Schaltungen (28) mit drei stabilen Zuständen in jedem Leistungsmodul (8), die durch ein Schreibtaktsignal auf den Steuerleitungen (26) angesteuert werden, um die gemultiplexten Datenleitungen (24) mit Empfangs-/Erfassungspins auf jeder Festkörperleistungssteuerung (SSPC) (16) zu verbinden; und
Puffer (30) mit drei stabilen Zuständen in jedem Leistungsmodul (8), die durch ein Lesetaktsignal auf den Steuerleitungen (26) angesteuert werden, um die gemultiplexten Dataleitungen (24) mit Übertragungspins auf jeder Festkörperleistungssteuerung (SSPC) (16) zu verbinden.

## Revendications

1. Architecture de commande et de communication pour un ensemble de distribution de puissance secondaire (SPDA) (2), comprenant :
une pluralité de modules de puissance (8), chaque module de puissance comprenant au moins un dispositif de commande de puissance à semi-conducteur (SSPC) (16) permettant de commander au moins une charge électrique connectée à l'ensemble de distribution de puissance secondaire (SPDA) (2) ;
des premier et second modules de commande (4, 6) permettant de traiter les signaux et de transférer les données de communication et de commande à l'intérieur de l'ensemble de distribution de puissance secondaire (SPDA) (2) ; et
des premier et second bus de données en série (10, 12), avec chaque bus connectant l'un des modules de commande (4, 6) directement à chaque dispositif de commande de puissance à semi-conducteur (SSPC) (16) à l'intérieur de chaque module de puissance (8) afin de transférer des données de communications et de commande entre les modules de commande (4, 6) et chaque dispositif de commande de puissance à semi-conducteur (16).

2. Architecture de commande et de communication selon la revendication 1, dans laquelle les premier et second modules de commande (4, 6) fournissent des données de communication et de commande redondantes à chaque dispositif de commande de puissance à semi-conducteur (SSPC) (16) à l'intérieur de chaque module de puissance (8).

3. Architecture de commande et de communication selon la revendication 1 ou 2, dans laquelle le second module de commande (16) transfère toutes les données de communication et de commande pour chaque dispositif de commande de puissance à semi-conducteur (SSPC) lorsque le premier module de commande (4) échoue.

4. Architecture de commande et de communication selon la revendication 1, 2 ou 3, dans laquelle le second module de commande (6) transfère des données de communications et de commande pour chaque dispositif de commande de puissance à semi-conducteur (SSPC) (16) via le second bus de données en série (12) lorsque le premier bus de données en série (10) échoue.

5. Architecture de commande et de communication selon l'une quelconque des revendications 1 à 4, dans laquelle le premier module de commande (4) transfère toutes les données de communication et de commande pour chaque dispositif de commande de puissance à semi-conducteur (SSPC) (16) lorsque le second module de commande (6) échoue.

6. Architecture de commande et de communication selon l'une quelconque des revendications 1 à 5, dans laquelle le premier module de commande (4) transfère des données de communication et de commande pour chaque dispositif de commande de puissance à semi-conducteur (SSPC) (16) via le premier bus de données en série (10) lorsque le second bus de données en série (12) échoue.

7. Architecture de commande et de communication selon l'une quelconque des revendications précédentes, dans laquelle chaque bus de données en série (10, 12) comprend une ligne unique.

8. Architecture de commande et de communication selon l'une quelconque des revendications 1 à 6, dans laquelle chaque bus de données en série (10, 12) comprend une pluralité de lignes de données multiplexées (24) et une ligne de commande (26), avec au moins autant de lignes de données multiplexées (24) que le nombre maximal de dispositif de commande de puissance à semi-conducteur (SSPC) (16) dans chaque module de puissance (8) et avec des données sur les lignes de données multiplexées (24) dirigées vers les dispositifs de commande de puissance à semi-conducteur (SSPC) (16) à l'intérieur du module de puissance (8) sélectionné par les lignes de commande (26).

9. Architecture de commande et de communication selon la revendication 8, dans laquelle les lignes de données multiplexées (24) sont d'un type qui permet la reconnaissance d'une transition d'un bit de données à un autre.

10. Architecture de commande et de communication selon la revendication 9, dans laquelle les lignes de données multiplexées (24) comprennent des lignes d'interface périphérique en série (SPI).

11. Architecture de commande et de communication selon la revendication 9, dans laquelle les lignes de données multiplexées (24) comprennent des lignes de non-retour à zéro modifiées (MNRZ).

12. Architecture de commande et de communication selon la revendication 9, dans laquelle les lignes de données multiplexées (24) comprennent des lignes codées en code Manchester.

13. Architecture de commande et de communication selon l'une quelconque des revendications 8 à 12, dans laquelle les lignes de commande (26) transfèrent des signaux de sélection codés sur bits multiples pour la sélection d'un module de puissance (8).

14. Architecture de commande et de communication selon la revendication 13, dans laquelle les lignes de commande (26) portent des signaux de sélection codés par trois bits.

15. Architecture de commande et de communication selon l'une quelconque des revendications 8 à 12, dans laquelle les lignes de commande (24) comprennent chacune une pluralité de lignes de données de commande qui transfèrent chacune des signaux de sélection sur bit unique pour sélectionner un module de puissance.

16. Architecture de commande et de communication selon la revendication 15, dans laquelle les lignes de commande (26) comprennent chacune six lignes de sélection.

17. Architecture de commande et de communication selon l'une quelconque des revendications 8 à 16, comprenant en outre :
des verrous à trois états (28) dans chaque module de puissance (8) commandés par un signal d'échantillonnage d'écriture sur les lignes de commande (26) pour coupler les lignes de données multiplexées (24) à des broches de réception/saisie sur chaque dispositif de commande de puissance à semi-conducteur (SSPC) (16) ; et
des tampons à trois états (30) dans chaque module de puissance (8) commandés par un signal d'échantillonnage de lecture sur les lignes de commande (26) afin de coupler les lignes de données multiplexées (24) à des broches de transmission sur chaque dispositif de commande de puissance à semi-conducteur (SSPC) (16).
